# EUROPEAN PATENT APPLICATION

(11) **EP 3 787 148 A1**
(43) Date of publication of application: **03.03.2021**
(21) Application number: 19020499.0
(22) Date of filing: 01.09.2019
(51) Int. Cl.: H02J 7/34

(54) **POWER MANAGEMENT ARCHITECTURE OF WIRELESS SENSORS**

(71) Applicant: Markiewicz, Michal, 20-314 Lublin (PL)
(72) Inventor: Markiewicz, Michal, 20-314 Lublin (PL)

(57) **Abstract**

A power management architecture of an energy-harvested wireless sensor node is to provide functionalities of a switch regulator by utilizing built-in features of a generic ultra-low power microcontroller unit (18). The microcontroller (18) outputs clock signal that drives switching transistor (14) in an ultra-low sleep mode. The microcontroller is periodically going to active mode, during which it uses its analogue-to-digital converter to measure input voltage of an energy harvester (11) and voltage of a rechargeable battery (17). In case those voltages are above predefined thresholds, it resumes normal radio activity. Otherwise, it keeps charging the battery (15), cyclically waking up by internal timer to measure voltage of the battery (15). If the battery voltage exceeds a predefined threshold it stops generation of the switching signal.

## Description

### Technical Field

H02J7/65 Circuit arrangements for charging or depolarising batteries or for supplying loads from batteries using converters specially adapted for use with a battery

### Background Art

A general architecture of a wireless sensor node can be divided into four subsystems: communication, computing for data processing and managing of the node, sensing for acquiring data, and power for providing and regulating power supply voltage.

The most fundamental requirement of a node is energy efficiency and autonomy. For that reason, nodes should supplement energy whenever possible or even completely rely on harvested energy. From the other hand the cost of a node is critical for its implementation, and it limits usage of sophisticated electronic circuits. This encourages designers of energy harvesting and power management circuits to propose not only energy-efficient solutions but also cost-efficient.

### Summary of invention

Accordingly, a primary object of the present invention is to provide a low-cost solution that utilizes ultra-low-power states of a microcontroller unit managing a wireless sensor node to supervise charging process of an embedded battery, preferably from a thermoelectric generator (due to availability of heat in various environments, especially in a form of waste heat produced by machines).

In order to achieve mentioned above, the present invention provides a method for power management of a node without any dedicated integrated circuit, solely relying on microcontroller capabilities, more specifically on its analogue-to-digital converters, clock sources, computing subsystem for implementing control logic and support of low power states to minimize quiescent current.

### Technical Problem

Wireless sensor nodes are not active all the time, but cyclically go to a low power mode, and an active mode, during which they make measurements, send them by the embedded radio and go back to sleep. Wireless sensor nodes could be either battery powered or could harvest the energy from the environment.

To convert solar, thermal or any other kind of energy there is a need of having a power management unit responsible for voltage conversion and supervising battery charging process. Modern power management integrated circuits have control logic which manages the process. Those ICs are able to start from a very low input voltages (low cold-start) and are often characterized by high efficiency of energy conversion. They have relative low quiescent current. Moreover, they could shut down a microcontroller and sensors connected to it to prevent the battery from too deep discharging.

There is a need to minimize the cost of a wireless sensor node, while not harming its capabilities to power itself.

### Solution to Problem

Modern microcontrollers, especially those dedicated to wireless sensor network applications, have capabilities of going into deep sleep (ultra-low power) mode while still having very limited functionalities to drive output pins. It is possible to take an advantage of this functionality in connection with the other features available in the active mode.

Instead of using dedicated integrated circuits for power management with embedded analogue-to-digital converters, comparators, pulse-width-modulation or square wave generators to drive switching transistor, it is possible to use features of a microcontroller, and its memory to store the control program that manages power management.

During active mode, the microcontroller is capable of making measurements of input voltage and battery voltage to make a decision whenever to initiate the battery charging process, stop charging, or - having enough energy stored in a rechargeable battery - to transit to active mode in which it can start radio communication or read data from sensors.

When there is not enough energy to start normal wireless sensor node activity - but the input voltage is high enough - the microcontroller of a wireless sensor node outputs its internal clock signal to one of its general-purpose input/output pins that is connected to switching transistor.

Switching transistor driven by the microcontroller is a part of switched mode power supply, preferably in boost converter topology.

Once the battery is charged to a predefined level, the microcontroller goes to the active mode during which it can initiate radio communication or switch to a pulse-width-modulated signal generation to optimize charging process of the battery.

### Advantageous effect of invention

The main advantage of the disclosed invention is the reduction in the number of components required in wireless sensor node power subsystem and therefore the overall cost of the system.

Moreover, the flexibility of programmable logic of a microcontroller allows to define thresholds depending on various conditions: for example, during a disaster, a wireless sensor node could receive an instruction from a network coordinator to maintain the wireless transmission despite the risk of draining the battery.

### Brief description of drawings

The features of the invention believed to be novel are set forth with particularity on the appended claims. The invention itself, however, may be best understood by reference to the following detailed description of the invention, which describes an exemplary embodiment of the invention, taken in conjunction with the accompanying drawings, in which:
Fig. 1 is a schematic of a wireless sensor node with power management circuit governed by a microcontroller.
Fig. 2 is a flowchart of control logic managing the charging process.

### Description of embodiments

In cooperation with attached drawings, the technical contents and detailed description of the present invention are described thereinafter according to a preferable embodiment, being not used to limit its executing scope. Any equivalent variation and modification according to the appended claims is all covered by the claims claimed the present invention.

Reference will now be made to the drawing figures to describe the present invention in detail.

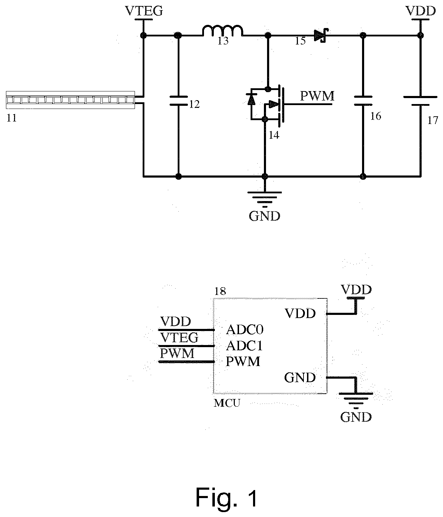

Reference is made to Fig. 1 which is a schematic of a wireless sensor node with power management circuit. The boost converter topology requires switching of keying transistor (14). It is driven by output signal from a microcontroller (18). The current drawn from thermoelectric generator (11) flows through an inductor (13) when the transistor (14) is in ON state. Once the transistor (14) goes to OFF state, the energy stored in the inductor (13) flows through switching diode, preferable Schottky diode and charges a capacitor (16) and a battery (17). The charging process is controlled by the microcontroller (18) which periodically wakes up to turn off switching and measure voltage across thermoelectric generator (11) and voltage of the battery (17). If the voltage across thermoelectric generator (11) is high enough, the microcontroller (17) transits from ultra-low power mode - during which its only activity was to generate square wave output - and goes into power mode which higher power consumption in which it is capable of generating pulse-width-modulated output, which allows optimization of the charging process. While in active mode, microcontroller (18) stops charging the battery (17) once it's voltage exceeds predefined threshold.

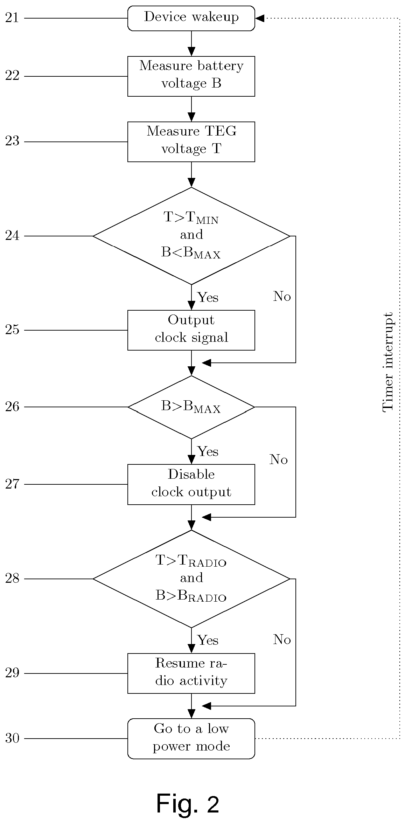

Reference is made to Fig. 2 which describes the control loop of power management using an ultra-low power microcontroller of an energy-harvested wireless sensor node. At first the microcontroller (18) wakes up (21) and measures battery voltage (22) denoted as B, and measures thermoelectric generator open circuit voltage (23) denoted as T. Then the microcontroller (18) checks if the battery voltage B is below BMAX threshold and input voltage T is above TMIN threshold. Then the microcontroller (18) outputs clock signal (25) that drives switching transistor. If the battery voltage B exceeds a given threshold (26), then output clock is disabled (27). If the battery voltage B and input voltage T are higher than predefined thresholds then the microcontroller (18) resumes radio activity. Finally, the node goes to a low power mode (30) to wake up by timer interrupt, and the cycle repeats (21).

### Example

The sample embodiment uses TEC-12706 thermoelectric generator (Peltier module), a rechargeable coin-cell battery, and NXP MKW41Z Bluetooth Low Energy, IEEE 802.15.4-compatible, System on a chip with 16-bit analogue-to-digital converter, supporting a very-low-leakage stop mode (VLLSx; current consumption in VLLSx mode is at micro-Amperes level at buck mode (3V) at 25°C), with internal 1kHz low-power oscillator which signal could be send to output at very-low-leakage stop mode. The current is drawn from a TEG and a capacitor connected to it in parallel. The current flows through an inductor when switching transistor is in ON state. When the switching transistor is in OFF state, then the energy stored in the inductor flows through a Schottky diode, and charges a rechargeable battery. The experiments shown that it is possible to build a self-powered wireless sensor node with only few additional discrete components including a quartz oscillator, an inductor, a switching transistor and two capacitors - capable of providing operational wireless sensor node working with IEEE 802.15.4 radio protocol, which could be powered from a thermoelectric generator with very low temperature gradient.

### Industrial applicability

The invention could be applied to design of a low cost, small form factor, ultra-low power sensor with radio communication capabilities for condition monitoring of objects which produce heat, like electric motors.

### Citation list

### Patent literature

In patent application US 2014/0159638 entitled "Portable energy harvesting storing, and charging device" there is a description of a dedicated integrated circuit responsible for managing charging process of a battery using harvested energy for portable devices.

In patent application US 2017/0133938 entitled "Micro-energy harvester for battery free applications" there is a description of an integrated power manager that provides complete solution for transforming and storing energy in a form of micro-energy harvester to power separated micro-energy applications.

None of the patent applications mentioned above describe usage of a microcontroller as a switching regulator to eliminate a need of having dedicated integrated circuit to control power management and charging processes.

## Claims

1. Power management architecture of an energy-harvested wireless sensor node **characterized by** the usage of an embedded microcontroller, in particular its analogue-to-digital converter to measure input voltage and battery voltage, its capability to periodically go to an active mode, when it can execute control logic instructions, and to go to an ultra-low power mode, when it can output clock signal, while having power consumption preferably at micro-Watts level, to act as switching regulator, and by substituting functionalities of a switching regulator, giving the designer a possibility to reduce the cost of a wireless sensor node.

2. Power management architecture according to claim 1, **characterized in that** the microcontroller of the wireless sensor node is powered form a rechargeable battery, having voltage levels significantly higher than voltage available from a thermoelectric generator working with low temperature gradients, and therefore eliminating the need of boosting the voltage prior to make it usable for switching keying transistors.

3. Power management architecture according to claim 1, **characterized in that** the microcontroller of wireless sensor node is generating switching signal in an ultra-low power state that drives switching mode DC/DC converter, preferably in a boost topology.

4. Power management architecture according to claim 1, **characterized in that** the microcontroller could use a built-in comparator to quickly verify whenever input and battery voltages levels are within predefined thresholds, instead of performing precise measurements using embedded analogue-to-digital converter.

5. Power management architecture according to claim 1, **characterized in that** there is no dedicated integrated circuit responsible for managing charging process, and all the control logic is performed by a microcontroller of a wireless sensor node.

6. Power management architecture according to claim 1, **characterized in that** the microcontroller uses pulse-width-modulated switching signal to optimize charging process.
